# EUROPEAN PATENT APPLICATION

(11) **EP 4 779 775 A1**
(43) Date of publication of application: **22.07.2026**
(21) Application number: 25182625.1
(22) Date of filing: 13.06.2025
(51) Int. Cl.: H01M 50/244, H01M 50/258, H01M 50/262, H01M 50/291, H01M 50/342, H01M 50/367

(54) **BATTERY CASE, BATTERY AND ELECTRICAL DEVICE**

(30) Priority: 21.01.2025 CN 202510096374; 21.01.2025 CN 202520143339 U; 21.03.2025 WO PCT/CN2025/084258
(71) Applicant: Eve Energy Co., Ltd., Huizhou, Guangdong 516006 (CN)
(72) Inventor: HUANG, Liliang, Huizhou, Guangdong, 516006 (CN)
(74) Representative: Berggren Oy

(57) **Abstract**

The application provides a battery case, including: a base; and a holder connected to the base, wherein the holder and the base together form one or more pressure relief channels so that the one or more pressure relief channel is housed by the holder and the base; wherein at least one of the holder and the base has a blocking portion located at an end of each of the one or more the pressure relief channels, and the holder and the base are in sealing connection with each other by the blocking portion to block the end of the pressure relief channel. The battery case of the present application reduces the impact of thermal runaway of the battery on the electrical device.

## Description

### TECHNICAL FIELD

The present application relates to the technical field of battery, and in particular to a battery case, a battery and an electrical device.

### BACKGROUND

Batteries are widely used in energy storage systems, transportations, consumer electronics and other fields. Battery thermal runaway refers to the phenomenon that during the operation of the battery, the chemical reaction caused by the increase in internal temperature is accelerated, resulting in further increase in temperature, thus forming a self-reinforcing feedback loop, which may eventually cause the battery to overheat, smoke, burn or even explode.

In the related art, the high-temperature gas generated when the battery thermally runs away can easily spread to the location of the electrical device, causing a great impact on the electrical device.

### SUMMARY

In a first aspect, the present application provides a battery case, including:
a base; and
a holder connected to the base, wherein the holder and the base together define one or more pressure relief channels;
wherein at least one of the holder and the base has a blocking portion located at an end of each of the one or more the pressure relief channels, and the holder and the base are in sealing connection with each other by the blocking portion to block the end of the pressure relief channel.

Optionally, each of the holder and the base has the blocking portion, and the blocking portion of the holder is in sealing connection with the blocking portion of the base.

Optionally, the holder has the blocking portion, and the base is formed with a sealing groove in which the blocking portion is inserted.

Optionally, the battery case further includes a sealing member arranged between the blocking portion and the sealing groove.

Optionally, the sealing connection is formed by welding the blocking portion.

Optionally, the battery case further includes a supporting member located between the holder and the base to connect the holder to the base, wherein the supporting member, the holder and the base together define the one or more pressure relief channels so that the one or more pressure relief channels extends along an extension direction of the supporting member.

Optionally, the supporting member protrudes from a bottom plate of the base, the holder is connected to an end of the supporting member away from the bottom plate, and the supporting member is configured to support the holder so that the one or more pressure relief channels are formed between the holder and the bottom plate.

Optionally, the supporting member is formed with a snap-fitting notch, and the blocking portion is inserted through the snap-fitting notch into the sealing groove.

Optionally, the holder includes a first side and a second side arranged opposite to each other, wherein the first side of the holder and the base together define the pressure relief channel, the holder is formed with a raised portion raised from the second side of the holder, the raised portion is formed with an explosion-proof structure having a structural strength less than a structural strength of other parts of the raised portion, the raised portion is configured to allow a battery cell to be installed thereon, and the explosion-proof structure is arranged opposite to an explosion-proof valve of the battery cell.

Optionally, the explosion-proof structure at least partially overlaps with the one or more pressure relief channels.

Optionally, a vent cavity is formed on a side of the raised portion away from the battery cell, and the vent cavity is in communication with the one or more pressure relief channels.

Optionally, the explosion-proof structure includes a first weak portion and a second weak portion, wherein the first weak portion is located on the first side of the holder, and the second weak portion is located on the second side of the holder.

Optionally, in a direction from the second side of the holder to the first side of the holder, an orthographic projection of the second weak portion on the base is located within an orthographic projection of the first weak portion on the base.

Optionally, the second weak portion includes an explosion-proof slot which opens at a side away from the one or more pressure relief channels.

Optionally, the raised portion includes a protruding portion and a receiving portion, wherein the protruding portion protrudes from the second side of the holder, the receiving portion is connected to the protruding portion, and the first weak portion includes an explosion-proof notch formed at the connection between the receiving portion and the protruding portion, and the explosion-proof notch opens at a side toward the one or more pressure relief channels.

Optionally, a cross-sectional area of the explosion-proof notch gradually increases along a direction from the battery cell to the one or more pressure relief channels.

Optionally, the holder is formed with an extension portion extending toward a side wall of the base, the side wall of the base is formed with a support portion, and the extension portion abuts against a side of the support portion away from a bottom plate of the base.

Optionally, the holder includes a first side and a second side arranged opposite to each other, wherein the first side of the holder and the base together form the one or more pressure relief channels, and the second side of the holder is configured to allow a battery cell to be installed thereon;
wherein the holder has an insulating partition plate protruding from the second side of the holder to separate the battery cell from the base.

Optionally, the battery case further includes a supporting member protruding from a bottom plate of the base;
wherein the holder is connected to an end of the supporting member away from the bottom plate, and the supporting member is configured to support the holder so that the one or more pressure relief channels are formed between the holder and the bottom plate.

Optionally, the supporting member includes a plurality of support ribs arranged in parallel, wherein an end of each of the plurality of support ribs is fixedly connected to the bottom plate, and a further end of the support rib is in contact with the holder.

Optionally, the base, the holder and every two adjacent ones of the plurality of support ribs together form one of the one or more the pressure relief channels; and/or
the plurality of support ribs are evenly spaced; and/or
the plurality of support ribs are in sealing connection with the holder.

Optionally, at least one of the plurality of support ribs are formed with a connection channel to connect two adjacent ones of the pressure relief channels.

Optionally, the connection channel is formed as a through hole formed in the support rib or an opening formed at a connection portion of the support rib to the bottom plate (12).

Optionally, the supporting member and the base are integrally formed.

In a second aspect, the present application provides a battery, including battery cells (6) and the above battery case, wherein the battery cells are installed on a side of the holder away from the one or more pressure relief channels.

Optionally, the battery cells are spaced apart from the base, and a foaming agent is filled between the battery cells and the base; and/or
two adjacent ones of the battery cells are spaced apart, and a foaming agent is filled between the two adjacent battery cells; and/or
the battery cells and the holder are spaced apart, and a foaming agent is filled between the battery cells and the holder.

Optionally, the battery further includes an electrical component arranged on a side of the blocking portion away from the one or more pressure relief channels.

In a third aspect, the present application provides an electrical device, including the above battery.

In the battery case according to the present application, the holder and the base are connected together so as to form at least one pressure relief channel. When the battery has thermal runaway, the high-temperature gas can be discharged through the pressure relief channel to achieve pressure relief for the battery. In addition, one end of the pressure relief channel is blocked by a blocking portion so that only one end of the pressure relief channel is communicable with the outside, that is, the pressure relief channel achieves a one-way pressure relief. The high-temperature gas generated when the battery has thermal runaway can only flow in one direction along the pressure relief channel, which can prevent the high-temperature gas from flowing in both directions along the pressure relief channel. In other words, the present application uses the blocking portion to enable the pressure relief channel to achieve a one-way pressure relief, and arranges the electrical device on the side of the blocking portion away from the pressure relief channel, which can effectively prevent the high-temperature gas generated when the battery has thermal runaway from spreading to the location of the electrical device, thereby reducing the impact of the battery thermal runaway on the electrical device.

### BRIEF DESCRIPTION OF THE DRAWINGS

FIG. 1 is a schematic diagram of a battery case according to an embodiment of the present application.
FIG. 2 is an enlarged view of portion A in FIG. 1 according to an embodiment of the present application.
FIG. 3 is a schematic diagram of a battery case according to an embodiment of the present application.
FIG. 4 is an enlarged view of portion B in FIG. 3 according to an embodiment of the present application.
FIG. 5 is a schematic diagram of a base according to an embodiment of the present application.
FIG. 6 is an enlarged view of portion C in FIG. 5 according to an embodiment of the present application.
FIG. 7 is a schematic diagram of a holder according to an embodiment of the present application.
FIG. 8 is an enlarged view of portion D in FIG. 7 according to an embodiment of the present application.
FIG. 9 is a schematic diagram of a battery according to an embodiment of the present application.
FIG. 10 is an enlarged view of portion E in FIG. 9 according to an embodiment of the present application.
FIG. 11 is a schematic diagram of a battery according to an embodiment of the present application.
FIG. 12 is an enlarged view of portion F in FIG. 11 according to an embodiment of the present application.
FIG. 13 is a schematic diagram of a battery according to an embodiment of the present application.
FIG. 14 is a cross-sectional view of a battery according to an embodiment of the present application.
FIG. 15 is an enlarged view of portion G in FIG. 14 according to an embodiment of the present application.

### DETAILED DESCRIPTION OF THE EMBODIMENTS

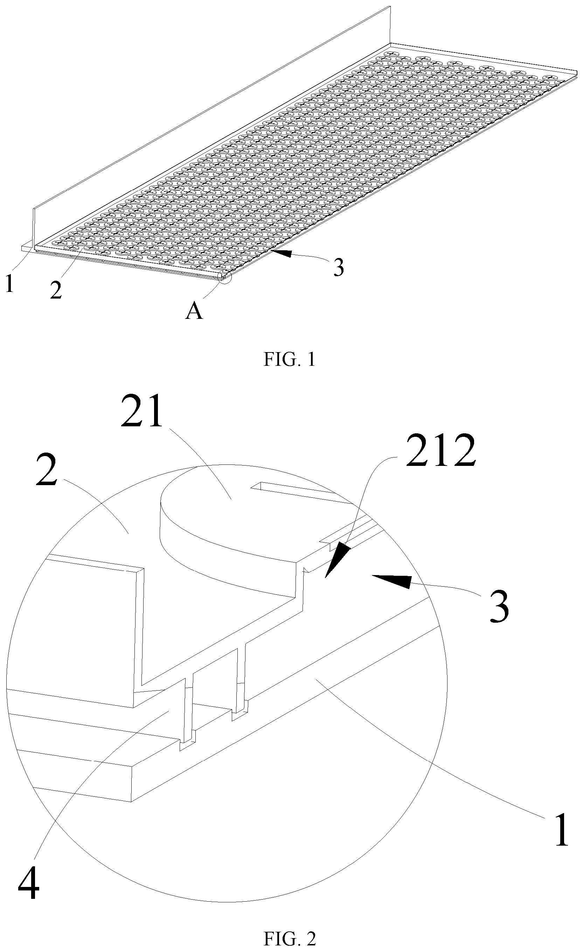

An embodiment of the present application discloses a battery case. Referring to FIGs. 1 to 4, the battery case includes a base 1 and a holder 2. The holder 2 is connected to the base 1. A pressure relief channel 3 is defined by the holder 2 and the base 1 so that the holder 2 and the base 1 together house the pressure relief channel 3.

One of the holder 2 and the base 1 has a blocking portion 4 located at an end of the pressure relief channel 3, and the other of the holder 2 and the base 1 is in sealing connection with the blocking portion 4 to block the end of the pressure relief channel 3.

According to the battery case of an embodiment of the present application, the holder 2 and the base 1 are connected together so that the holder 2 and the base 1 house the pressure relief channel 3. When the battery has thermal runaway, the high-temperature gas can be discharged through the pressure relief channel 3 to achieve pressure relief for the battery. In addition, an end of the pressure relief channel 3 is blocked by the blocking portion 4 so that only one end of the pressure relief channel 3 is communicable with the outside. That is to say, the pressure relief channel 3 is a one-way pressure relief channel 3. The high-temperature gas generated when the battery has thermal runaway can only flow in one direction along the pressure relief channel 3, which can prevent the high-temperature gas from flowing in both directions along the pressure relief channel 3. In other words, the present application enables the pressure relief channel 3 to achieve a one-way pressure relief due to the blocking portion 4, and enables the electrical device to be arranged on the side of the blocking portion 4 away from the pressure relief channel 3, which can effectively prevent the high-temperature gas generated when the battery has thermal runaway from spreading to the location of the electrical device, thereby reducing the impact of the battery on the electrical device during thermal runaway.

It is understandable that in the related art, the pressure relief channel 3 is communicable in both directions, which allows the high-temperature gas to flow out at both ends of the pressure relief channel 3, and no matter which side of the pressure relief channel 3 the electrical device is located, when the battery has thermal runaway, the high-temperature gas will spread to the location of the electrical device, thereby causing a great impact on the electrical device, and even causing damage to the electrical device. However, the present application blocks an end of the pressure relief channel 3 by the blocking portion 4, so that the high-temperature gas generated when the battery is in thermal runaway cannot flow to both ends of the pressure relief channel 3 at the same time, and then the electrical device can be arranged on the side of the blocking portion 4 away from the pressure relief channel 3, and the high-temperature gas will flow in the direction away from the electrical device, which can prevent the high-temperature gas from spreading to the location of the electrical device, and effectively reduce the impact of the high-temperature gas generated when the battery is in thermal runaway on the electrical device.

In some examples, the base 1 is made of, for example, an aluminum profile, and the holder 2 is made of, for example, plastic.

In some embodiments, both the holder 2 and the base 1 have a blocking portion 4, and the blocking portion 4 of the holder 2 is sealed and connected to the s blocking portion 4 of the base 1.

It can be understood that the blocking portion 4 of the holder 2 and the blocking portion 4 of the base 1 cooperate to block an end of the pressure relief channel 3, so that the pressure relief channel 3 achieves a one-way pressure relief, and then electrical device can be arranged on the side of the blocking portion 4 away from the pressure relief channel 3, which can prevent high-temperature gas from spreading to the location of the electrical device, effectively reducing the impact of high-temperature gas generated during thermal runaway of the battery on the electrical device.

It can be understood that the blocking portion 4 of the holder 2 and the blocking portion 4 of the base 1 are sealed and connected with each other, so that gas cannot pass through the connection between the blocking portion 4 of the holder 2 and the blocking portion 4 of the base 1, thereby preventing the high-temperature gas generated during thermal runaway of the battery from flowing to the electrical device through the connection between the blocking portion 4 of the holder 2 and the blocking portion 4 of the base 1.

**In** some embodiments, the blocking portion 4 of the holder 2 is sealed and connected to the base 1.

It can be understood that the holder 2 is formed with a blocking portion 4 which cooperates with the base 1 to block an end of the pressure relief channel 3, so that the pressure relief channel 3 achieve a one-way pressure relief, and then the electrical device can be arranged on the side of the blocking portion 4 away from the pressure relief channel 3, which can prevent the high-temperature gas from spreading to the location of the electrical device, and effectively reduce the impact of the high-temperature gas generated during thermal runaway of the battery on the electrical device.

It can be understood that the blocking portion 4 of the holder 2 is sealed and connected to the base 1, so that gas cannot pass through the connection between the blocking portion 4 of the holder 2 and the base 1, thereby preventing the high-temperature gas generated during thermal runaway of the battery from flowing to the electrical device through the connection between the blocking portion 4 of the holder 2 and the base 1.

In some embodiments, the blocking portion 4 of the base 1 is sealed and connected to the holder 2.

It can be understood that the base 1 is formed with a blocking portion 4 which cooperates with the holder 2 to block an end of the pressure relief channel 3, so that the pressure relief channel 3 achieves a one-way pressure relief, and then the electrical device can be arranged on the side of the blocking portion 4 away from the pressure relief channel 3, which can prevent the high-temperature gas from spreading to the location of the electrical device, and effectively reduce the impact of the high-temperature gas generated during thermal runaway of the battery on the electrical device.

It can be understood that the blocking portion 4 of the base 1 is sealed and connected to the holder 2, so that gas cannot pass through the connection between the blocking portion 4 of the base 1 and the holder 2, thereby preventing the high-temperature gas generated during thermal runaway of the battery from flowing to the electrical device through the connection between the blocking portion 4 of the base 1 and the holder 2.

In some embodiments, the blocking portion 4 of the holder 2 is sealed and connected to the base 1, and the blocking portion 4 of the base 1 is sealed and connected to the holder 2.

It can be understood that both the holder 2 and the base 1 are formed with a blocking portion 4, and the blocking portion 4 of the holder 2 and the base 1 can seal an end of the pressure relief channel 3, and the blocking portion 4 of the base 1 and the holder 2 can also seal the end of the pressure relief channel 3, thereby achieving double sealing of the end of the pressure relief channel 3 and ensuring the sealing effect of the pressure relief channel 3.

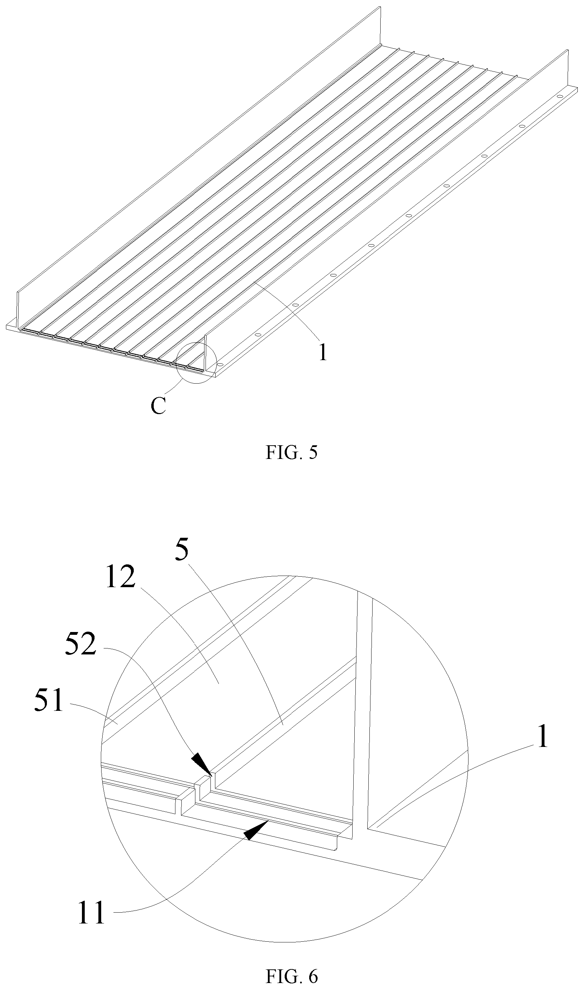

In some embodiments, referring to FIGs. 2 and 4 to 6, the base 1 is formed with a sealing groove 11, and the blocking portion 4 is inserted into the sealing groove 11.

It can be understood that the blocking portion 4 is inserted into the sealing groove 11 so that the blocking portion 4 is prevented from shifting under the action of the high-temperature and high-pressure gas generated when the battery is thermally runaway, thereby improving the installation stability of the blocking portion 4, so that the blocking portion 4 can stably block the pressure relief channel 3, so that the high-temperature gas generated when the battery is thermally runaway cannot flow to both ends of the pressure relief channel 3 at the same time, and then the electrical device can be arranged on the side of the blocking portion 4 away from the pressure relief channel 3, and the high-temperature gas will flow in the direction away from the electrical device, which can prevent the high-temperature gas from spreading to the location of the electrical device, and effectively reduce the impact of the high-temperature gas generated when the battery is thermally runaway on the electrical device.

The battery case further includes a sealing member, which is arranged between the blocking portion 4 and the surfaces of the sealing groove 11.

It can be understood that the sealing member can improve the sealing performance between the blocking portion 4 and the sealing groove 11, prevent the gas from flowing from between the blocking portion 4 and the sealing groove 11 to the electrical device, and further prevent the high-temperature gas generated during thermal runaway of the battery from flowing through between the blocking portion 4 and the sealing groove 11 to the electrical device, and prevent the high-temperature gas from spreading to the location of the electrical device, thereby effectively reducing the impact of the high-temperature gas generated during thermal runaway of the battery on the electrical device.

In some embodiments, the blocking portion 4 is fixedly connected to the base 1 by welding.

It can be understood that the blocking portion 4 and the base 1 are fixedly connected by welding, thereby improving the connection stability between the blocking portion 4 and the base 1.

It can be understood that fixing the sealing part 4 and the base 1 by welding can improve the sealing performance of the connection between the sealing part 4 and the base 1, and prevent the gas from flowing from the connection between the sealing part 4 and the base 1 to the electrical device, thereby preventing the high-temperature gas generated during thermal runaway of the battery from flowing to the electrical device through the connection between the sealing member 4 and the base 1, and preventing the high-temperature gas from spreading to the location of the electrical device, thereby effectively reducing the impact of the high-temperature gas generated during thermal runaway of the battery on the electrical device.

In some embodiments, referring to FIGs. 2 and 4 to 6, the battery case also includes a supporting member 5, which is connected between the holder 2 and the base 1. The supporting member 5, the holder 2 and the base 1 together house the pressure relief channel 3 which extends along the extension direction of the supporting member 5.

It can be understood that the supporting member 5 separates the holder 2 and the base 1, so that the supporting member 5, the holder 2 and the base 1 can house the pressure relief channel 3. When the battery has thermal runaway, the high-temperature gas can be discharged through the pressure relief channel 3 to achieve pressure relief for the battery.

In some embodiments, referring to FIGs. 2 and 4 to 6, the supporting member 5 is connected to the bottom plate 12 of the base 1 and protrudes from the bottom plate 12, the holder 2 is connected to the end of the supporting member 5 facing away from the bottom plate 12, and the supporting member 5 is configured to support the holder 2 so that the pressure relief channel 3 is formed between the holder 2 and the bottom plate 12.

It is understandable that the supporting member 5 can support the holder 2, realize effective support for the holder 2, avoid deformation or displacement of the holder 2 relative to the base 1, and improve the installation stability and structural stability of the holder 2. In addition, the supporting member 5 can separate the holder 2 and the base 1, so that the pressure relief channel 3 is formed between the holder 2 and the base 1. When the battery has thermal runaway, the high-temperature gas can be discharged through the pressure relief channel 3 to achieve pressure relief for the battery.

It is understandable that the holder 2 is configured to allow the battery cells 6 to be installed thereon. In this case, the holder 2 will be affected by the gravity of the battery cells 6. In the related art, the holder 2 is directly connected to the base 1. Under the gravity of the battery cells 6, the holder 2 is easily deformed to the side of the pressure relief channel 3, which in turn causes the pressure relief channel 3 to be squeezed, resulting in the pressure relief speed being affected. When the battery thermally runs away, the high-temperature gas generated by the battery may be difficult to be quickly discharged. The present application uses a supporting member 5 to support the holder 2. The gravity of the battery cells 6 can be transmitted to the supporting member 5, which can effectively prevent the holder 2 from being deformed under the gravity of the battery cells 6, thereby avoiding the pressure relief channel 3 from being affected. This ensures that when the battery thermally runs away, the high-temperature gas can be quickly discharged through the pressure relief channel 3, thereby ensuring the safety of the battery.

In some embodiments, referring to FIGs. 2 and 4 to 6, the supporting member 5 includes a plurality of support ribs 51 arranged in parallel. An end of each support rib 51 is fixedly connected to the bottom plate 12, and another end of the support rib 51 abuts against the holder 2.

It can be understood that each support rib 51 is fixedly connected to the bottom plate 12, and the holder 2 abuts against the end of the support rib 51 facing away from the bottom plate 12, so that the support rib 51 can support the bottom plate 12 and form a pressure relief channel 3 between the holder 2 and the bottom plate 12.

It is understandable that, the parallel arrangement of the support ribs 51 causes the space between the holder 2 and the bottom plate 12 to be divided into multiple subspaces. In this case, the plurality of support ribs 51 form a plurality of pressure relief channels 3 between the holder 2 and the bottom plate 12.

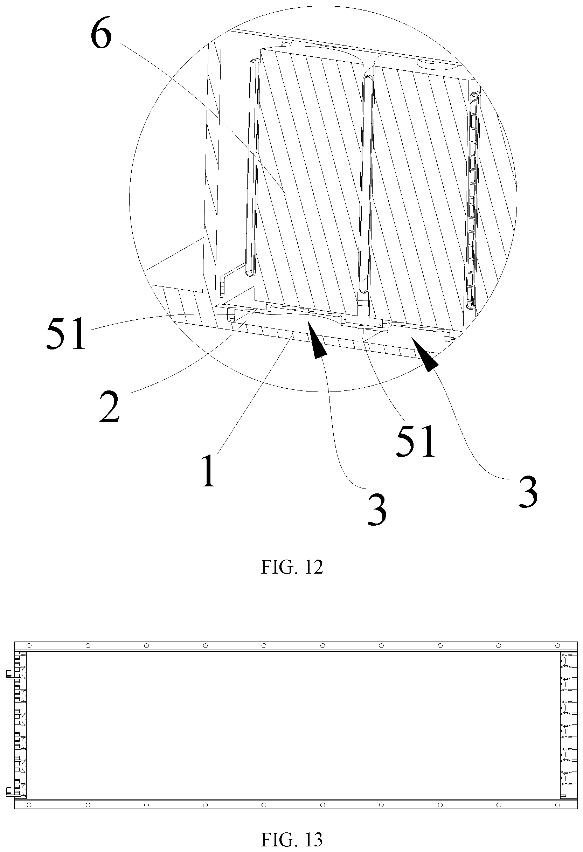

In some embodiments, referring to FIG. 12, the base 1, the holder 2, and every two adjacent support ribs 51 together defines the pressure relief channel 3 so that the pressure relief channel 3 is housed by the base 1, the holder 2, and every two adjacent support ribs 51.

It can be understood that two adjacent support ribs 51 are arranged opposite to each other so that every two adjacent support ribs 51, the base 1 and the holder 2 together form a pressure relief channel 3. In the case that a plurality of support ribs 51 are provided, a plurality of pressure relief channels 3 are formed between the base 1 and the holder 2.

In some examples, a plurality of rows of battery cells 6 are installed on the side of the holder 2 away from the pressure relief channel 3, and the plurality of rows of battery cells 6 are arranged in one-to-one correspondence with the plurality of pressure relief channels 3, that is, each row of battery cells 6 is provided with a corresponding pressure relief channel 3. In the case that different pressure relief channels 3 are not connected to each other, when thermal runaway occurs in one row of battery cells 6, the high-temperature gas will not flow to the pressure relief channels 3 corresponding to other rows of battery cells 6, reducing the impact on other rows of battery cells 6. In the case that different pressure relief channels 3 are connected to each other, when thermal runaway occurs in one row of battery cells 6, the high-temperature gas can be discharged through all pressure relief channels 3, increasing the pressure relief speed.

In some embodiments, the plurality of support ribs 51 are evenly spaced, so that the support provided by the plurality of support ribs 51 to the holder 2 is also uniform, and the consistency of different pressure relief channels 3 is improved.

In some embodiments, the support ribs 51 are sealed and connected to the holder 2.

It can be understood that the support ribs 51 are sealed and connected to the holder 2, which improves the sealing between the support ribs 51 and the holder 2, and can prevent the high-temperature gas generated by thermal runaway of the battery cell 6 from flowing to other positions through the connection between the support ribs 51 and the holder 2, thereby ensuring that the high-temperature gas flows along the pressure relief channels 3.

**In** some embodiments, at least some of the support ribs 51 are formed with a connecting channel configured to connect two adjacent pressure relief channels 3.

It can be understood that the holder 2 is configured to allow the battery cell 6 to be installed thereon. When the battery cells 6 corresponding to one of the two pressure relief channels 3 connected to each other undergoes thermal runaway, the high-temperature gas generated by the thermal runaway can be discharged through at least two pressure relief channels 3, thereby increasing the pressure relief speed.

In some embodiments, the connecting channel may be formed as a through hole formed in the support rib or an opening formed at the connection portion of the support rib.

In some embodiments, the supporting member 5 and the base 1 are integrally formed, thereby improving the connection strength between the supporting member 5 and the base 1 and ensuring the sealing performance of the connection between the supporting member 5 and the base 1.

In some embodiments, referring to FIGs. 2 and 4 to 6, the supporting member 5 is formed with a snap-fitting notch 52, and the blocking portion 4 is inserted through the snap-fitting notch 52 into the sealing groove 11.

It is understandable that by forming the snap-fit notch 52 at the support component 5, the support component 5 is prevented from obstructing the blocking portion 4, so that the blocking portion 4 can be inserted through the snap-fit notch 52 into the sealing groove 11.

In some examples, the blocking portion 4 is sealed to the surfaces of the snap-fit notch 52 to improve the sealing performance between the blocking portion 4 and the supporting member 5, and to prevent high-temperature gas generated during thermal runaway of the battery from flowing to the electrical device through the connection between the blocking portion 4 and the supporting member 5.

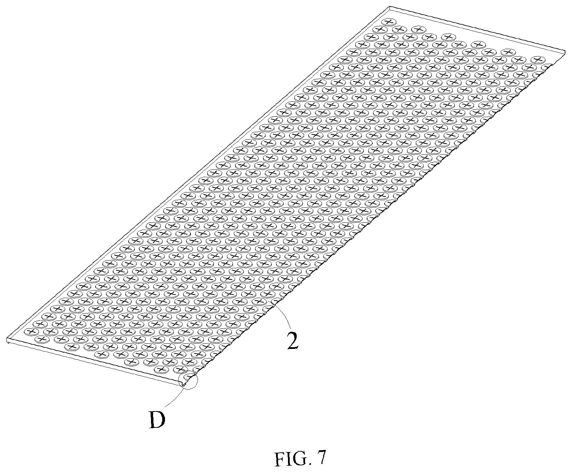

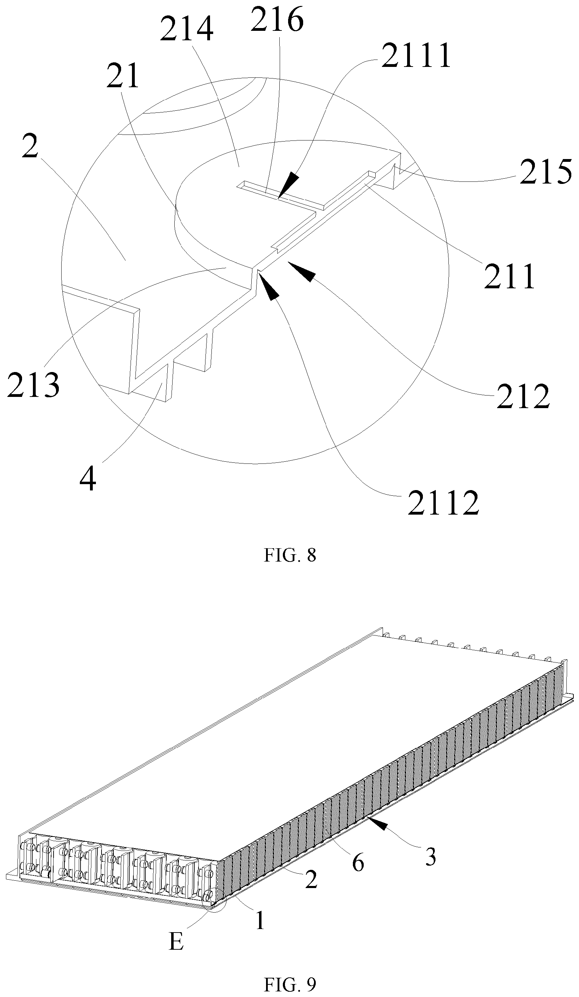

In some embodiments, referring to FIGs. 7 and 8, the holder 2 includes a first side and a second side that are oppositely arranged. The first side of the holder 2 and the base 1 together form the pressure relief channel 3. The holder 2 is formed with a raised portion 21 which is raised from the second side of the holder 2. The raised portion 21 is formed with an explosion-proof structure 211, and the structural strength of the explosion-proof structure 211 is less than the structural strength of other parts of the raised portion 21. The raised portion 21 is configured to allow a corresponding battery cell 6 to be installed, and the explosion-proof structure 211 is arranged opposite to the explosion-proof valve of the battery cell.

It can be understood that by forming an explosion-proof structure 211 on the raised portion 21, when thermal runaway occurs in the battery cell 6, the high-temperature gas generated by the battery cell 6 can cause the explosion-proof structure 211 to break because the structural strength of the explosion-proof structure 211 is less than the structural strength of other parts of the raised portion 21, allowing the high-temperature gas to flow into the pressure relief channel 3, so as to discharge the high-temperature gas through the pressure relief channel 3 and achieve pressure relief of the battery.

It is understandable that the raised portion 21 is raised from the second side of the holder 2, and the battery cell 6 is installed on the raised portion 21. Therefore, the battery cell 6 also raised from the second side of the holder 2. This increases the distance between the battery cell 6 and the pressure relief channel 3.

It can be understood that the explosion-proof structure 211 is arranged opposite to the explosion-proof valve of the battery cell, so that the high-temperature gas generated by the battery cell 6 out of control can impact the explosion-proof structure 211.

Referring to FIGs. 7 and 8, a vent cavity 212 is formed on a side of the raised portion 21 away from the battery cell 6, and the vent cavity 212 is in communication with the pressure relief channel 3.

It is understandable that when the battery cell 6 experiences thermal runaway, the high-temperature gas generated by the battery cell 6 can flow into the pressure relief channel 3 through the vent cavity 212 after the explosion-proof structure 211 breaks.

It can be understood that the raised portion 21 is raised from the second side of the holder 2, and the vent cavity 212 in communication with the pressure relief channel 3 is formed on the raised portion 21, thereby allowing an increased amount of gas that can be accommodated in the space between the holder 2 and the base 1.

In some embodiments, the explosion-proof structure 211 at least partially overlaps with the pressure relief channel 3.

It can be understood that when thermal runaway occurs in the battery cell 6, the high-temperature gas generated by the battery cell 6 causes the explosion-proof structure 211 to break, so that the high-temperature gas can flow into the pressure relief channel 3, and at least a portion of the explosion-proof structure 211 is arranged to be opposite to the pressure relief channel 3, so that at least a portion of the high-temperature gas generated by the battery cell 6 can directly flow into the pressure relief channel 3, thereby ensuring the high-temperature gas discharge speed and further ensuring the pressure relief speed of the battery.

In some embodiments, referring to FIG. 8, the explosion-proof structure 211 includes a first weak portion 215 and a second weak portion 216. The first weak portion 215 is located on the first side of the holder 2, and the second weak portion 216 is located on the second side of the holder 2.

It can be understood that by forming the first weak portion 215 and the second weak portion 216 on the raised portion 21, when thermal runaway occurs in the battery cell 6, the high-temperature gas generated by the battery cell 6 can cause the first weak portion 215 and the second weak portion 216 to break because the structural strength of the first weak portion 215 and the second weak portion 216 is less than the structural strength of other parts of the raised portion 21, allowing the high-temperature gas to flow into the pressure relief channel 3, so as to realize the discharge of the high-temperature gas through the pressure relief channel 3 and realize the pressure relief of the battery.

It can be understood that the first weak portion 215 and the second weak portion 216 are respectively arranged on both sides of the raised portion 21, so that the high-temperature gas generated by the battery cell 6 will cause the weak portions on both sides of the raised portion 21 to break when the battery cell 6 has thermal runaway, which is conducive to the high-temperature gas breaking through the explosion-proof structure.

In some embodiments, along the direction from the second side of the holder 2 to the first side of the holder 2, the orthographic projection of the second weak portion 216 on the base is located within the orthographic projection of the first weak portion 215 on the base.

It is understandable that the second weak portion 216 is located in the middle of the explosion-proof structure, and the second weak portion 216 is located at the edge of the explosion-proof structure. The high-temperature gas generated when the battery cell 6 is in thermal runaway will impact the second weak portion 216, causing the second weak portion 216 to break, and then the first weak portion 215 will break. In other words, when the battery cell 6 is in thermal runaway, the second weak portion 216 located in the middle will be broken by the high-temperature gas first, and then under the impact of the high-temperature gas and the movement of the second weak portion 216, the first weak portion 215 will also break, making it easier for the high-temperature gas to break through the explosion-proof structure.

In some embodiments, referring to FIGs. 7 and 8, the second weak portion 216 includes an explosion-proof slot 2111 which opens at the side away from the pressure relief channel 3.

It can be understood that the explosion-proof slot 2111 is thin in thickness, and the explosion-proof slot 2111 opens toward the battery cell 6. When the battery cell 6 has thermal runaway, the high-temperature gas generated by the battery cell 6 will directly flow to the explosion-proof slot 2111, causing an impact on the explosion-proof slot 2111, causing the explosion-proof slot 2111 to break, and then the high-temperature gas can flow into the pressure relief channel 3 to achieve pressure relief.

It can be understood that the explosion-proof slot 2111 opens at the side away from the pressure relief channel 3, the explosion-proof slot 2111 can gather the gas generated by the battery cell 6 when the battery cell 6 has thermal runaway, so that the gas pressure at the explosion-proof slot 2111 increases, which is conducive to the high-temperature gas generated by the thermal runaway of the battery cell 6 to break through the explosion-proof slot 2111.

In some embodiments, referring to FIGs. 7 and 8, the raised portion 21 includes a protruding portion 213 and a receiving portion 214. The protruding portion 213 protrudes from the second side of the holder 2, and the receiving portion 214 is connected to the protruding portion 213. The first weak portion 215 includes an explosion-proof notch 2112 formed at the connection between the receiving portion 214 and the protruding portion 213, and the explosion-proof notch 2112 opens toward the pressure relief channel 3.

It is understandable that the explosion-proof notch 2112 is thin in thickness. When the raised portion 21 is impacted by the high-temperature gas generated due to thermal runaway of the battery cell 6, the explosion-proof notch 2112 will break, causing the receiving portion 214 to separate from the protruding portion 213, and the high-temperature gas can flow into the pressure relief channel 3 to achieve pressure relief.

When the receiving portion 214 is impacted by high-temperature gas, the explosion-proof notch 2112 is subjected to a force toward the pressure relief channel 3. Since the opening of the explosion-proof notch 2112 is toward the side of the pressure relief channel 3, the explosion-proof notch 2112 is more likely to break.

It can be understood that the diameter of the battery cell 6 is greater than or equal to the diameter of the raised portion 21 so that the protruding portion 213 is able to be in contact with the battery cell 6 and support the battery cell 6. When the explosion-proof notch 2112 breaks and the receiving portion 214 is separated from the protruding portion 213, the battery cell 6 will not fall into the pressure relief channel 3 under the support of the protruding portion 213.

In some embodiments, the cross-sectional area of the explosion-proof notch 2112 gradually increases along the direction from the battery cell 6 to the pressure relief channel 3, which is conducive to the breakage of the explosion-proof notch 2112 when the receiving portion 214 is impacted by high-temperature gas.

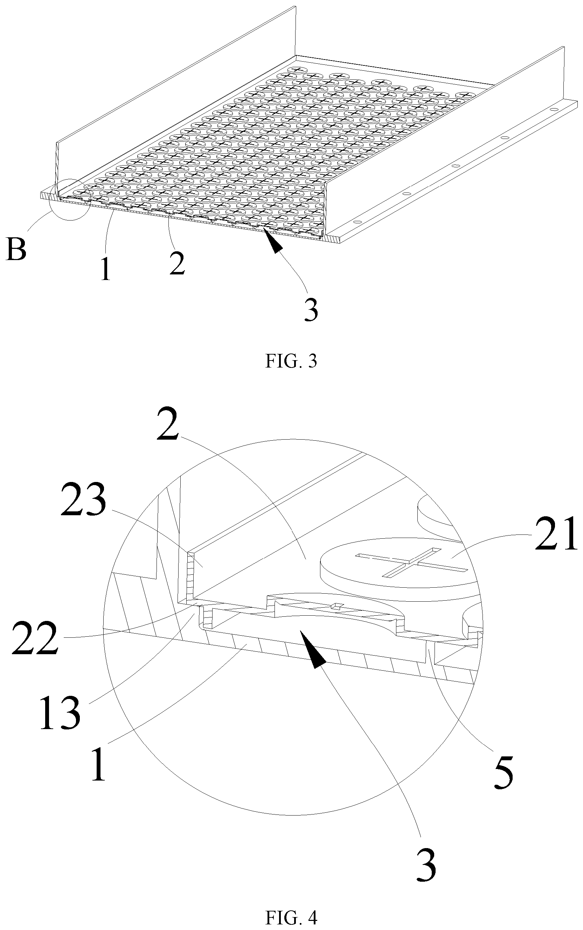

In some embodiments, referring to FIG. 4, the holder 2 is formed with an extension portion 22, which extends toward a side wall of the base 1, and the side wall of the base 1 is formed with a support portion 13, and the extension portion 22 abuts against a side of the support portion 13 away from the bottom plate of the base 1.

It can be understood that the support portion 13 can support the extension portion 22, thereby improving the installation stability of the holder 2.

In some embodiments, referring to FIG. 4, the holder 2 includes a first side and a second side that are arranged opposite to each other, the first side of the holder 2 and the base 1 together house the pressure relief channel, and the second side of the holder 2 is configured to allow the battery cell to be installed thereon.

The holder 2 has an insulating partition plate 23, which protrudes from the second side of the holder 2. The insulating partition plate 23 is configured to separate the battery cell from the base 1.

It can be understood that the insulating partition plate 23 can prevent the battery cell from directly contacting the base 1, thereby improving the insulation of the battery case.

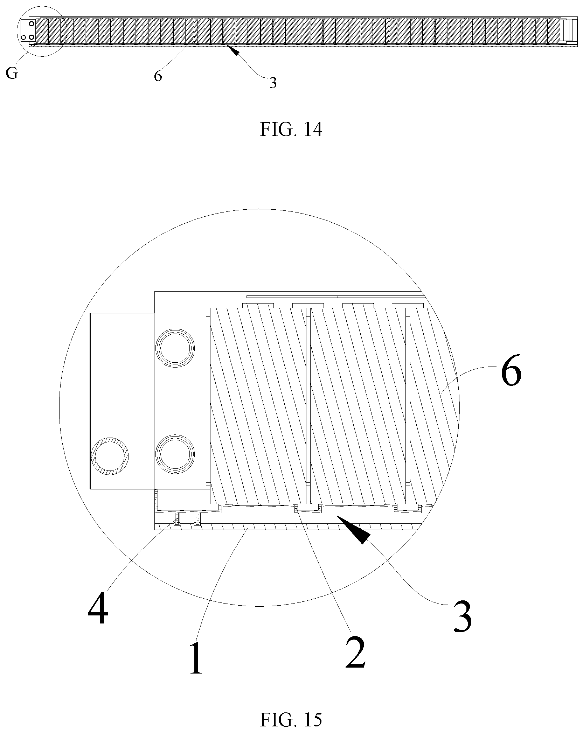

The present application further discloses a battery. Referring to FIGS. 9, 10, 13, 14 and 15, the battery includes at least one battery cell 6 and the above-mentioned battery case. The at least one battery cell 6 is installed on a side of the holder 2 away from the at least one pressure relief channel 3.

In the battery of according to the embodiment of the present application, the holder 2 and the base 1 are with each other together so that the holder 2 and the base 1 together form a pressure relief channel 3 so that the pressure relief channel 3 is housed by the holder 2 and the base 1. When the battery has thermal runaway, the high-temperature gas can be discharged through the pressure relief channel 3 to achieve pressure relief for the battery. In addition, an end of the pressure relief channel 3 is blocked by the blocking portion 4 so that only one end of the pressure relief channel 3 is communicable with the outside to achieve a one-way pressure relief. The high-temperature gas generated when the battery has thermal runaway can only flow in one direction along the pressure relief channel 3, which can prevent the high-temperature gas from flowing in both directions along the pressure relief channel 3. In other words, the present application enables the pressure relief channel 3 to achieve a one-way pressure relief by the arrangement of the blocking portion 4, and arranges the electrical device on the side of the blocking portion 4 away from the pressure relief channel 3, which can effectively prevent the high-temperature gas generated when the battery has thermal runaway from spreading to the location of the electrical device, thereby reducing the impact of the battery on the electrical device during thermal runaway.

In the present application, one end of the pressure relief channel 3 is blocked by the blocking portion 4, so that the high-temperature gas generated during thermal runaway of the battery cannot flow to both ends of the pressure relief channel 3 at the same time. The electrical device is arranged on the side of the blocking portion 4 away from the pressure relief channel 3, and the high-temperature gas flows away from the electrical device, which can prevent the high-temperature gas from spreading to the location of the electrical device, effectively reducing the impact of the high-temperature gas generated during thermal runaway of the battery on the electrical device.

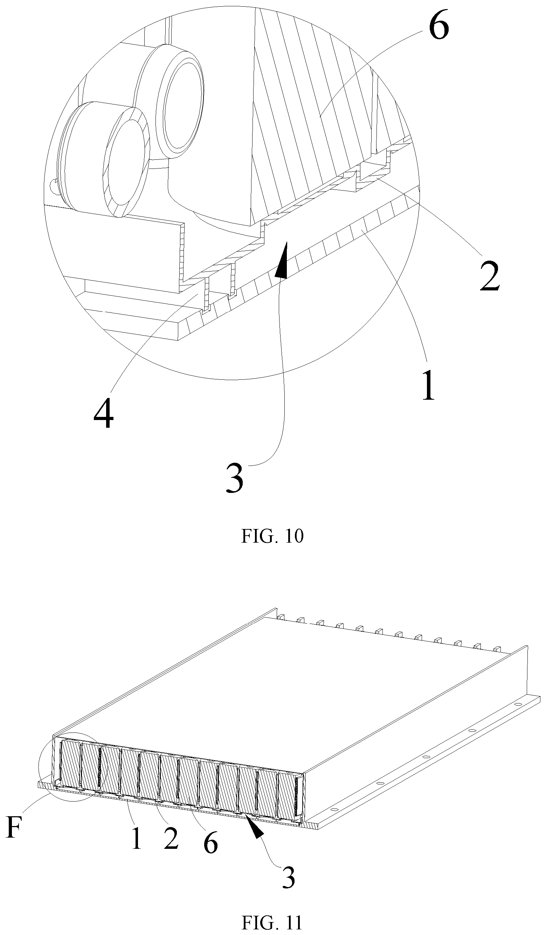

In some embodiments, referring to FIGs. 11 and 12, the battery cell 6 is spaced apart from the base 1, and a foaming agent is filled between the battery cell 6 and the base 1.

It is understandable that the battery cell 6 and the base 1 are spaced apart, that is, a gap is formed between the battery cell 6 and the base 1, so as to facilitate filling of a foaming agent between the battery cell 6 and the base 1 to achieve fixation.

In some embodiments, two adjacent battery cells 6 are spaced apart, and a foaming agent is filled between the two adjacent battery cells 6.

It can be understood that, referring to FIGs. 11 and 12, two adjacent battery cells 6 are spaced apart, that is, a gap is formed between the two adjacent battery cells 6, so as to facilitate filling the foaming agent between the two adjacent battery cells 6 to achieve fixation.

In some embodiments, the battery cell 6 and the holder 2 are spaced apart, and a foaming agent is filled between the battery cell 6 and the holder.

It is understandable that the battery cell 6 and the holder 2 are spaced apart, that is, a gap is formed between the battery cell 6 and the holder 2, so as to facilitate filling of a foaming agent between the battery cell 6 and the holder 2 to achieve fixation.

In some embodiments, the battery further includes electrical components, which is disposed on a side of the blocking portion 4 facing away from the pressure relief channel 3.

It can be understood that the electrical components are arranged on the side of the blocking portion 4 away from the pressure relief channel 3. Since the blocking portion 4 blocks one end of the pressure relief channel 3, the high-temperature gas generated during thermal runaway of the battery cannot flow to both ends of the pressure relief channel 3 at the same time. The high-temperature gas will flow in a direction away from the electrical device, which can prevent the high-temperature gas from spreading to the location of the electrical device, effectively reducing the impact of the high-temperature gas generated during thermal runaway of the battery on the electrical device.

The present application further discloses an electric device, which includes the above-mentioned battery.

In the electrical device according to an embodiment of the present application, the holder 2 and the base 1 are connected together to form a pressure relief channel 3 so that the pressure relief channel 3 is housed by the holder 2 and the base 1. When the battery has thermal runaway, the high-temperature gas can be discharged through the pressure relief channel 3 to achieve pressure relief for the battery. In addition, one end of the pressure relief channel 3 is blocked by the blocking portion 4 so that only one end of the pressure relief channel 3 is communicable with the outside to achieve a one-way pressure relief. The high-temperature gas generated when the battery has thermal runaway can only flow in one direction along the pressure relief channel 3, which can prevent the high-temperature gas from flowing in both directions along the pressure relief channel 3. In other words, the present application enables the pressure relief channel 3 to achieve a one-way pressure relief due to the arrangement of the blocking portion 4, and arranges the electrical device on the side of the blocking portion 4 away from the pressure relief channel 3, which can effectively prevent the high-temperature gas generated when the battery has thermal runaway from spreading to the location of the electrical device, thereby reducing the impact of the battery thermal runaway on the electrical device.

According to the present application, one end of the pressure relief channel 3 is blocked by the blocking portion 4, so that the high-temperature gas generated during thermal runaway of the battery cannot flow to both ends of the pressure relief channel 3 at the same time, and the electrical device is arranged on the side of the blocking portion 4 away from the pressure relief channel 3 so that he high-temperature gas flows in a direction away from the electrical device, which can prevent the high-temperature gas from spreading to the location of the electrical device, and effectively reduce the impact of the high-temperature gas generated during thermal runaway of the battery on the electrical device.

It should be noted that the electrical device may be a vehicle, an energy storage power supply, a consumer electronic device, a medical device, a smart city, an aircraft, or a household appliance. It should be noted that the above is only examples of electrical device and does not specifically limit the electrical device.

## Claims

1. A battery case, **characterized by** comprising:
a base (1); and
a holder (2) connected to the base (1), wherein the holder (2) and the base (1) together define one or more pressure relief channels (3);
wherein at least one of the holder (2) and the base (1) has a blocking portion (4) located at an end of each of the one or more the pressure relief channels (3), and the holder (2) and the base (1) are in sealing connection with each other by the blocking portion (4) to block the end of the pressure relief channel (3).

2. The battery case according to claim 1, **characterized in that** each of the holder (2) and the base (1) has the blocking portion (4), and the blocking portion (4) of the holder (2) is in sealing connection with the blocking portion (4) of the base (1).

3. The battery case according to claim 1, **characterized in that** the holder (2) has the blocking portion (4), and the base (1) is formed with a sealing groove (11) in which the blocking portion (4) is inserted;
optionally, the battery case further comprises a sealing member arranged between the blocking portion (4) and the sealing groove (11).

4. The battery case according to claim 3, **characterized in that** the sealing connection is formed by welding the blocking portion (4);
wherein the battery case further comprises a supporting member located between the holder (2) and the base (1) to connect the holder (2) to the base (1), wherein the supporting member, the holder (2) and the base (1) together define the one or more pressure relief channels (3) so that the one or more pressure relief channels (3) extend along an extension direction of the supporting member.

5. The battery case according to claim 4, **characterized in that** the supporting member protrudes from a bottom plate (12) of the base (1), the holder (2) is connected to an end of the supporting member away from the bottom plate (12), and the supporting member is configured to support the holder (2) so that the one or more pressure relief channels (3) are formed between the holder (2) and the bottom plate (12); and/or
the supporting member is formed with a snap-fitting notch (52), and the blocking portion (4) is inserted through the snap-fitting notch (52) into the sealing groove (11).

6. The battery case according to any one of claims 1 to 5, **characterized in that** the holder (2) comprises a first side and a second side arranged opposite to each other, wherein the first side of the holder (2) and the base (1) together define the pressure relief channel (3), the holder (2) is formed with a raised portion (21) raised from the second side of the holder (2), the raised portion (21) is formed with an explosion-proof structure (211) having a structural strength less than a structural strength of other parts of the raised portion (21), the raised portion (21) is configured to allow a battery cell (6) to be installed thereon, and the explosion-proof structure (211) is arranged opposite to an explosion-proof valve of the battery cell (6).

7. The battery case according to claim 6, **characterized in that** the explosion-proof structure (211) at least partially overlaps with the one or more pressure relief channels (3); and/or
a vent cavity (212) is formed on a side of the raised portion (21) away from the battery cell (6), and the vent cavity (212) is in communication with the one or more pressure relief channels (3).

8. The battery case according to claim 6, **characterized in that** the explosion-proof structure (211) comprises a first weak portion (215) and a second weak portion (216), wherein the first weak portion (215) is located on the first side of the holder (2), and the second weak portion (216) is located on the second side of the holder (2).

9. The battery case according to claim 8, **characterized in that** in a direction from the second side of the holder (2) to the first side of the holder (2), an orthographic projection of the second weak portion (216) on the base (1) is located within an orthographic projection of the first weak portion (215) on the base (1); and/or
the second weak portion (216) comprises an explosion-proof slot (2111) which opens at a side away from the one or more pressure relief channels (3); and/or
the raised portion (21) comprises a protruding portion (213) and a receiving portion (214), wherein the protruding portion (213) protrudes from the second side of the holder (2), the receiving portion (214) is connected to the protruding portion (213), and the first weak portion (215) comprises an explosion-proof notch (2112) formed at the connection between the receiving portion (214) and the protruding portion (213), and the explosion-proof notch (2112) opens at a side toward the one or more pressure relief channels (3), optionally, a cross-sectional area of the explosion-proof notch (2112) gradually increases along a direction from the battery cell (6) to the one or more pressure relief channels (3).

10. The battery case according to any one of claims 1 to 5, **characterized in that** the holder (2) is formed with an extension portion (22) extending toward a side wall of the base (1), the side wall of the base (1) is formed with a support portion (13), and the extension portion (22) abuts against a side of the support portion (13) away from a bottom plate of the base (1).

11. The battery case according to any one of claims 1 to 5, **characterized in that** the holder (2) comprises a first side and a second side arranged opposite to each other, wherein the first side of the holder (2) and the base (1) together form the one or more pressure relief channels (3), and the second side of the holder (2) is configured to allow a battery cell (6) to be installed thereon;
wherein the holder (2) has an insulating partition plate (23) protruding from the second side of the holder (2) to separate the battery cell (6) from the base (1).

12. The battery case according to any one of claims 1 to 5, **characterized in that** the battery case further comprises a supporting member (5) protruding from a bottom plate (12) of the base (1);
wherein the holder (2) is connected to an end of the supporting member (5) away from the bottom plate (12), and the supporting member (5) is configured to support the holder (2) so that the one or more pressure relief channels (3) are formed between the holder (2) and the bottom plate (12);
wherein the supporting member (5) comprises a plurality of support ribs (51) arranged in parallel, wherein an end of each of the plurality of support ribs (51) is fixedly connected to the bottom plate (12), and a further end of the support rib (51) is in contact with the holder (2);
wherein the base (1), the holder (2) and every two adjacent ones of the plurality of support ribs (51) together form one of the one or more pressure relief channels (3); and/or the plurality of support ribs (51) are evenly spaced; and/or the plurality of support ribs (51) are in sealing connection with the holder (2);
wherein at least one of the plurality of support ribs (51) are formed with a connection channel to connect two adjacent ones of the pressure relief channels (3);
optionally, the connection channel is formed as a through hole formed in the support rib (51) or an opening formed at a connection portion of the support rib (51) to the bottom plate (12);
optionally, the supporting member (5) and the base (1) are integrally formed.

13. A battery, **characterized by** comprising battery cells (6) and the battery case as claimed in any one of claims 1 to 12, wherein the battery cells (6) are installed on a side of the holder (2) away from the one or more pressure relief channels (3).

14. The battery according to claim 13, **characterized in that** the battery cells (6) are spaced apart from the base (1), and a foaming agent is filled between the battery cells (6) and the base (1); and/or
two adjacent ones of the battery cells (6) are spaced apart, and a foaming agent is filled between the two adjacent battery cells (6); and/or
the battery cells (6) and the holder (2) are spaced apart, and a foaming agent is filled between the battery cells (6) and the holder (2);
optionally, the battery further comprises an electrical component arranged on a side of the blocking portion (4) away from the one or more pressure relief channels (3).

15. An electrical device, **characterized by** comprising the battery according to claim 13 or 14.
